# EUROPEAN PATENT APPLICATION

(11) **EP 4 653 650 A1**
(43) Date of publication of application: **26.11.2025**
(21) Application number: 25177693.6
(22) Date of filing: 20.05.2025
(51) Int. Cl.: E05B 35/00, E05B 19/26, G07D 7/20, G06K 19/08

(54) **ANTI-FORGERY KEY WITH ASSOCIATED METHOD OF MANUFACTURING AND METHODS OF DETECTING THE KEY**

(30) Priority: 24.05.2024 TW 113119385; 13.01.2025 TW 114101334
(71) Applicant: Meteor Design Co., Ltd., New Taipei City 237 (TW)
(72) Inventor: HSU, Cheng Wei, 237 New Taipei City (TW)
(74) Representative: Cabinet Chaillot

(57) **Abstract**

An anti-forgery key device, a manufacturing method thereof, a detection device therefor, and a detection method thereof are disclosed. The anti-forgery key device includes and is formed of a plurality of recognition bodies (2) having different colors, appearances, sizes, surface textures, and surface fracture facets. The recognition bodies (2) are mixed and randomly distributed in or on a carrier (1). Since the recognition bodies (2) respectively have unique structural features and are randomly distributed in/on the carrier (1), they form a recognition structure that is highly distinctive and hard to replicate. The structural features and distribution states of individual recognition bodies (2) can be detected through simple visual perception, artificial intelligence (AI), optical techniques, or haptic technology. Thus, a simple and effective recognition mechanism for unlocking can be provided.

## Description

### FIELD OF THE INVENTION

The present invention relates to an anti-forgery key device and a manufacturing method thereof, and more particularly, to a key device that is highly distinctive and difficult to replicate and to a method of manufacturing the same. The present invention also relates to a detection device and method for an anti-forgery key device, and more particularly, to a detection and unlocking device that is simple in structure and easily operable for detecting whether the anti-forgery key is real or not.

### BACKGROUND OF THE INVENTION

Conventionally, a simple way for controlling the access to a predetermined space or object is a physical key, which is used to unlock the space or object or to control access to the space or object. The conventional way has the advantages of convenient for use and simple unlocking procedure. However, following the constant progress in the techniques of replicating various types of hardware, the commonly available keys in the market having limited recognition ability for anti-theft purpose can no longer fulfill higher level requirements for security. Further, the current social pattern has become much more complicate than before, and identity recognition, limit to space access, and authority division are now widely required. Therefore, secret codes consisting of different combinations of letters and numbers have been used as recognition or decryption mechanisms.

Authentication frameworks based on the conventional secret codes have been widely employed in unlocking electronic devices and in identity recognition for online data transmission. Following quick development of artificial intelligence (AI) and the property and function of superposition operation of quantum computer technology, the conventional secret codes consisting of different combinations of purely letters and numbers can be decrypted within only an extremely short time of a few to a few tens of seconds. Therefore, it is difficult for the conventional secret codes to achieve expected identity recognition effect. Meanwhile, since the secret code is stored in an electronic device or a user's account and corresponding secret code are accessible from remote terminal device and server, such personal information is subjected to potential risk of leakage. Moreover, it is a burden to the user to memorize multiple sets of secret codes that are frequently used. And, it will cause a lot of inconveniences to the user in the event the user forgot any previously set secret code and has to apply for a new one that requires authentication again.

Recently, various biological characteristics, such as facial structure, fingerprint, pupil. Etc., have been widely used as identity recognition technical means in unlocking various electronic devices and identity recognizing and authenticating in online data transmission. However, different biological characteristics derive different recognition methods, which require investment in a large amount of manpower and capital to develop, and facial structure and fingerprint are subjected to the risk of destruction and deformation to cause relatively high rate of wrong determination, which forms a limit in practical application of biological characteristics in identity recognition and authentication. Further, with the progress in three-dimensional (3D) printing technique, facial structure or fingerprint recognition is subjected to the risk of being forged and decrypted. And, it is possible to involve in infringement of privacy in the process of setting up and using biometric equipment.

To overcome these problems, FIDO Alliance, a non-profit seeking organization, developed and promoted standards of identity online to ensure the security of a protocol for connecting server to terminal device in the course of logging on. The standards of identity online mainly adopt an authentication mode using a public-key based framework, which utilizes a public-key cryptography framework to perform multi-factor authentication (MFA). Only the corresponding public key is stored in an authentication server, while a private key is kept secret and stored in a user's terminal device only. When the user logs on, he or she needs only to provide the terminal device with personal information or also to perform fingerprint or voice recognition or to enter personal identification number (PIN), so as to decrypt the private key; and this procedure will decrypt the public key to allow the user to log on. Therefore, the user's confidential personal information is not concentratedly managed in the cloud server but is independently stored in the user's terminal device and managed in a distributed manner. That is, the user logs on cloud service through a framework involving both public key and private key. In this manner, it is able to effectively protect personal information.

However, in the process of using the encrypted private key to decrypt the public key in order to log on the server, a large quantity of complicate and high-speed operations must be performed by the server. For this purpose, a relatively high cost for setting up a complete set of computer hardware is required and a large amount of energy would be consumed in the process of operations. Therefore, it is actually not cost effective to use the public-key cryptography framework to perform multi-factor authentication (MFA). Under this situation, it is a common concern of related industries to develop an improved encrypted key structure that is similar to the above-described one but can be more easily manufactured at low cost and is hard to replicate, and the improved encrypted key structure should be able to be used with various, currently available recognition techniques, such as image recognition and physical property recognition, so as to form a highly analytical recognition mechanism that can be used as convenient as the conventional physical key and can be widely applied to many fields for the purpose of data security, data protection, and anti-fraud, such as being used in identity recognition required by various electronic devices, online personal information management, access control management, and goods anti-counterfeiting.

It is therefore tried by the inventor to overcome the disadvantages in the conventional mechanisms for identity recognition or anti-counterfeiting certification by developing an improved anti-forgery key device, and a manufacturing method, a detection device, and a detection method for the anti-forgery key device.

### SUMMARY OF THE INVENTION

A primary object of the present invention is to provide an anti-forgery key device and a manufacturing method thereof. To manufacture the anti-forgery key device, a plurality of recognition bodies of different colors, appearances, sizes, surface textures, and surface fracture facets is mixed and randomly distributed in and/or on a carrier. Since the recognition bodies respectively have unique structural features and are randomly distributed in/on the carrier at different locations and in different directions, they form a recognition structure that is highly distinctive and hard to replicate.

Another object of the present invention is to provide an anti-forgery key device including a plurality of recognition bodies, which can be color granules consisting of uncut small pieces of gemstones of natural crystals having natural colors or color granules consisting of uncut small pieces of gemstones being artificially dyed or specially processed and dyed, so that the recognition bodies require only relative low purchase cost and have better economic benefits in use. Any combination of the recognition bodies is unique and uncertain, which increases the complexity or difficulty in counterfeiting the key device and can therefore, suppresses the intention and motive of counterfeit.

A further object of the present invention is to provide detection method and device for an anti-forgery key device; the detection method and device utilize simple visual determination and optical technology along with AI edge device to accurately recognize the structural features and distribution states of the recognition bodies. Specifically, the detection device is a touch detection device includes a predetermined touch detection surface for touching while pressing irregular three-dimensional surfaces of the recognition bodies exposed from a carrier, so as to precisely sense touch strengths and depths at touched coordinate positions and convert the sensed strengths and depths into three-dimensional configurations, areas, and volumes of the recognition bodies at different coordinate positions. Thus, the detection device for anti-forgery key device according to the present invention forms a convenient and highly accurate recognition method.

The structure and the technical means adopted by the present invention to achieve the above and other objects can be best understood by referring to the following detailed description of the preferred embodiments and the accompanying drawings.

### BRIEF DESCRIPTION OF THE DRAWINGS

Wherein, the accompanying drawings include:
Fig. 1 is an exploded perspective view of an anti-forgery key device according to a first embodiment of the present invention;
Fig. 2 is an assembled view of Fig. 1;
Fig. 3 is a sectional side view of Fig. 2;
Fig. 4 is a flowchart showing the steps included in a method of manufacturing the anti-forgery key device of Fig. 1;
Fig. 5 shows the anti-forgery key device according to the first embodiment of the present invention is applied in the field of banking security;
Fig. 6 shows the anti-forgery key device according to the first embodiment of the present invention is applied in the field of access control security;
Fig. 7 shows the anti-forgery key device according to the first embodiment of the present invention is applied in the field of goods anti-counterfeit;
Fig. 8 shows the anti-forgery key device according to the first embodiment of the present invention is applied in the field of unlocking a mobile device;
Fig. 9 shows the anti-forgery key device according to the first embodiment of the present invention is applied in the field of personal information management and protection of information security;
Fig. 10 is an assembled perspective view of an anti-forgery key device according to a second embodiment of the present invention;
Fig. 11 is a sectional side view of Fig. 10;
Fig. 12 is an exploded perspective view showing a touch detection device can be used with the anti-forgery key device of Fig. 10 in a recognition and unlocking procedure;
Fig. 13 is an assembled sectional side view of Fig. 12;
Fig. 14 is an assembled perspective view of an anti-forgery key device according to a third embodiment of the present invention; and
Fig. 15 is a sectional side view of Fig. 14.

### DETAILED DESCRIPTION OF THE PREFERRED EMBODIMENTS

It is noted directional terms, such as upper, lower, left, right, front, rear, etc. shown in the following embodiments of the present invention are used with reference to the accompanying drawings. These directional terms are used only to facilitate easy description of the present invention and not intended to limit the present invention in any way. And, in the following described embodiments, the same or similar elements are denoted by the same or similar reference numerals to properly avoid repeated description.

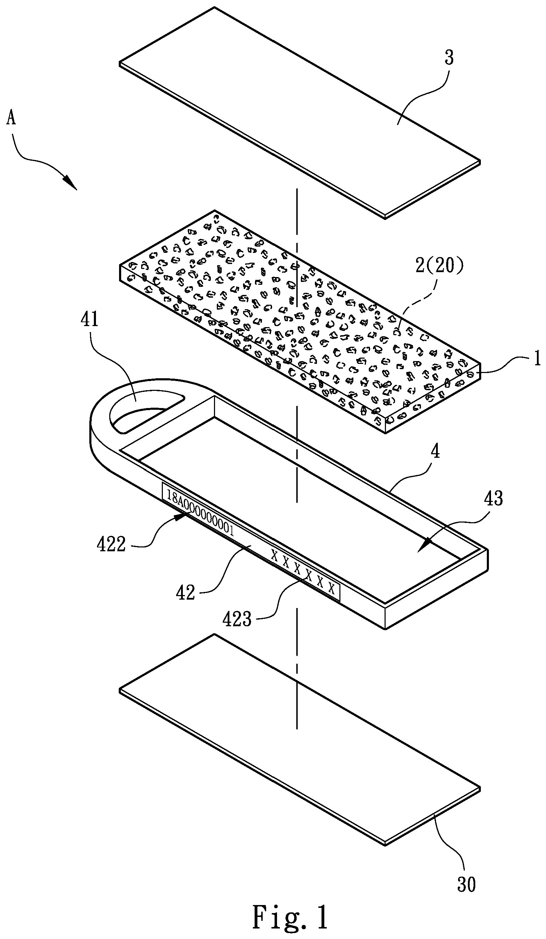

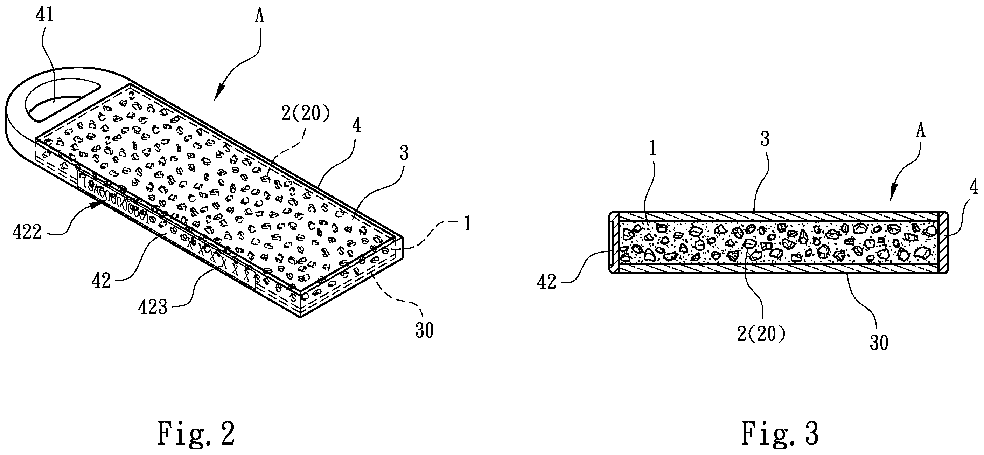

Please refer to Figs. 1 to 3, an anti-forgery key device according to a first embodiment of the present invention includes a recognition key A, which is composed of a carrier 1 and a plurality of recognition bodies 2. The carrier 1 is a structural body having a three-dimensional (3D) geometrical configuration, such as a cuboid, a cube, or a sphere. Alternatively, the carrier 1 can be a structural body of any specific 3D configuration. For example, the carrier 1 can be a cured resin body formed of a clear resin material injected into a predetermined specific mold.

The recognition bodies 2 can be color granules 20 having different colors, shapes, sizes, surface textures, and surface fractured facets. The color granules 20 may be uncut gemstones with natural colors, or may be clear uncut gemstones being artificially dyed (to produce fluorescence) or specially processed and dyed. Further, the color granules 20 are randomly distributed and fixedly held in the carrier 1.

In practical implementation of the anti-forgery key device, the color granules 20 are selected from igneous rocks, metamorphic rocks, sedimentary rocks, and other crystallites without fixed direction in the nature that are crystallized in special layers of rock under suitable geological conditions. These layers of rocks are exposed from the land surface due to diastrophism or volcanic eruption. The exposed rock layers are subjected to long-term hydrolysis and weathering, which leads to separation of amorphous grains from the rock layers. The separated amorphous grains respectively have a unique appearance looking like meteorite iron or meteorite manganese, full of holes.

Since the above mentioned color granules 20 are physically featured by different colors, shapes, sizes, surface textures, and surface fractured facets, every color granule 20 has independent properties. Further, since the color granules 20 are randomly distributed in the carrier 1 at different locations (or spatial coordinates) and in different orientations, these color granules 20 can show unique and random recognition images when the carrier 1 is observed from multiple sides, and accordingly, form a recognition mechanism that is uneasy to copy or counterfeit.

In an operable embodiment, the carrier 1 is set in a receiving space 43 defined in a loop-shaped frame 4. The carrier 1 has an upper and a lower surface, to which wear-resistant clear layers 3, 30 are attached, respectively. The wear-resistant clear layers 3, 30 can be made of a clear, wear-resistant material with excellent structural strength, such as two pieces of wear-resistant glass. The wear-resistant clear layers 3, 30 and the frame 4 together form a complete protection to outer side surfaces of the carrier 1 to thereby give the recognition key A an upgraded overall service life.

In the above structure, the frame 4 is provided on its outer surfaces with an information zone 42 and a through hole 41 according to actual need. The through hole 41 allows the recognition key A to be conveniently hung on or connected to another article via a cord. The information zone 42 includes at least one number 422. When the recognition key A is used for product counterfeiting protection, the number 422 is corresponding to a unique number assigned to each product. Meanwhile, if necessary, the information zone 42 can further include a mark 423, which can be a trademark of the product or a service mark of a company of the product. In practical implementation of the recognition key A, the number 422 and the mark 423 in the information zone 42 can be formed by laser sculpture and are therefore not easily replicable.

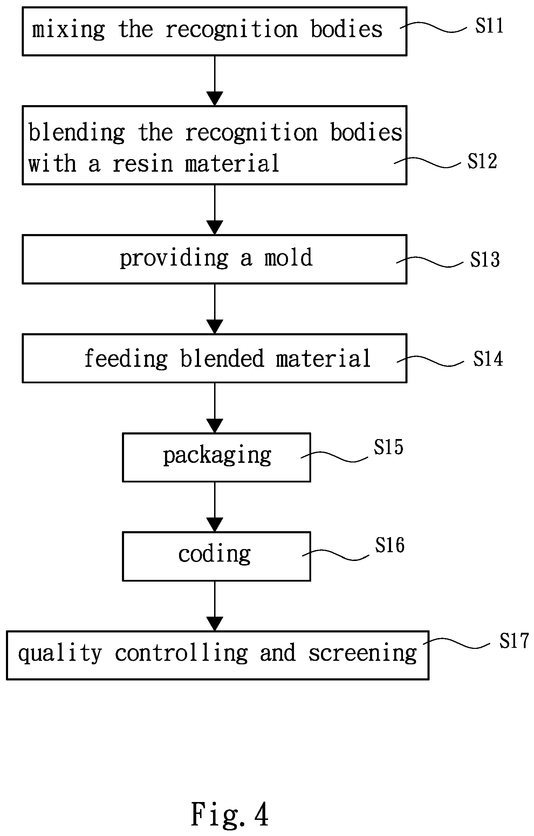

Please refer to Fig. 4, which shows a flowchart including steps included in a method of manufacturing the recognition key A in the first embodiment of the present invention. As shown, there are seven steps sequentially including a step S11 of mixing the recognition bodies, a step S12 of blending the recognition bodies with a resin material, a step S13 of providing a mold, a step S14 of feeding blended material, a step S15 of packaging, a step S16 of coding, and a step S17 of quality controlling and screening.

In the step S11 of mixing the recognition bodies, a plurality of recognition bodies 2 in the form of color granules 20 having different colors, shapes, sizes, and surface fractured facets is randomly mixed in a mixing tank.

In the step S12 of blending the recognition bodies with a resin material, the mixed recognition bodies 2 or color granules 20 are blended with a proper amount of resin material, so that the recognition bodies 2 or color granules 20 are randomly distributed in the resin material at different locations.

In the step S13 of providing a mold, a mold defining a predetermined material feeding space is provided. In the first embodiment of the present invention, the mold consists of the frame 4 and a wear-resistant clear layer 30 is spread over a bottom of the receiving space 43 defined in the frame 4, so that the receiving space 43 forms the material feeding space of the mold.

In the step S14 of feeding blended material, the resin material blended with the recognition bodies 2 or the color granules 20 is fed into (i.e. poured or extruded into) the material feeding space of the mold, i.e. the receiving space 43 of the frame 4. In the process of feeding the blended material, the mold can be kept in a vibrating state, so that the resin material can be uniformly filled and distributed in the material feeding space of the mold.

In the step S15 of packaging, a wear-resistant clear layer 3 is provided on an upper side of the material feeding space of the mold (i.e. the receiving space 43 of the frame 4). When the resin material is fully cured, the cured resin material forms the carrier 1, and the carrier 1 together with the recognition bodies 2 form the recognition key A.

In the step S16 of coding, an outer surface of the frame 4 and/or the carrier 1 is processed by way of laser sculpture to form an information zone 42 that includes at least one number 422.

In the step S17 of quality controlling and screening, artificial intelligence (AI) or optical technique can be utilized to perform a quick inspection and comparison on all recognition keys A completed through the above steps S11 to S16, so as to remove defective products or products that have the same recognition features, ensuring every produced recognition key A has unique recognition features.

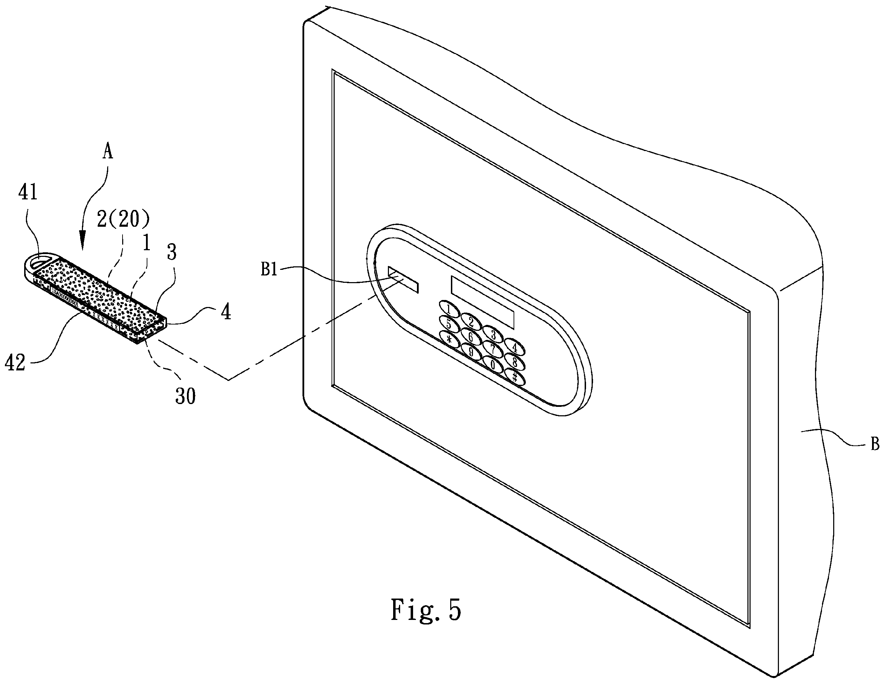

Please refer to Figs. 5 to 9. In a first practical application of the recognition key A according to the first embodiment of the present invention, recognition image information of all side surfaces of the recognition key A is stored in advance in a safe or a vault B or an interpretation and analysis device B1 that can be an AI edge device. To use the recognition key A, first extend the recognition key A into the interpretation and analysis device B1, as shown in Fig. 5. The interpretation and analysis device B1 is internally provided with an optical detection instrument capable of taking precision images of at least one side of the recognition key A and comparing the images with the recognition image information previously stored in the interpretation and analysis device B1. If a result from the comparison is "match" without error, the safe or vault B can be opened to achieve a recognition function for banking security.

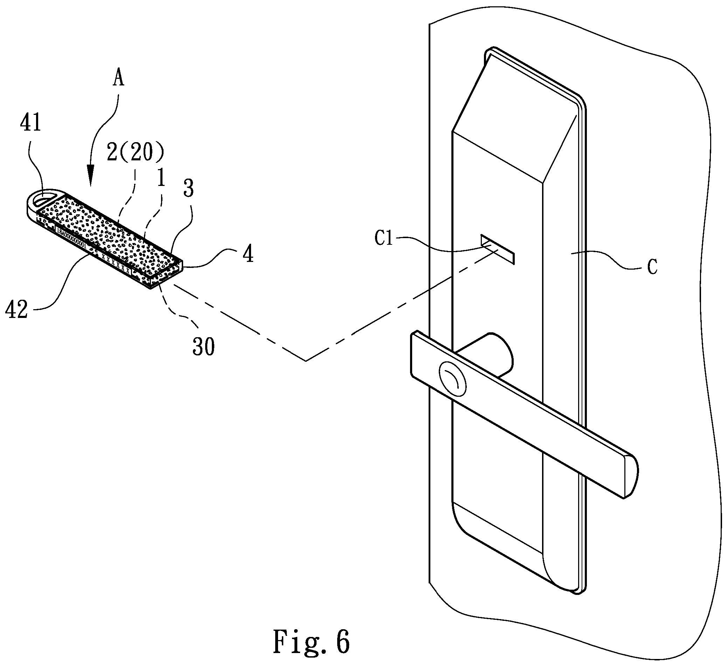

In a second practical application, recognition image information of all side surfaces of the recognition key A can be stored in advance in an interpretation and analysis device C1 provided on a locking device C such as a door lock. To use the recognition key A, first extend the recognition key A into the interpretation and analysis device C1, as shown in Fig. 6. An optical detection instrument provided in the interpretation and analysis device C1 takes precision images of at least one side surface of the recognition key A. The images of the recognition key A are analyzed by comparing them with the recognition image information previously stored in the interpretation and analysis device C1. If a result from the comparison is "match" without error, the locking device or door lock C can be opened to achieve a recognition function for access control.

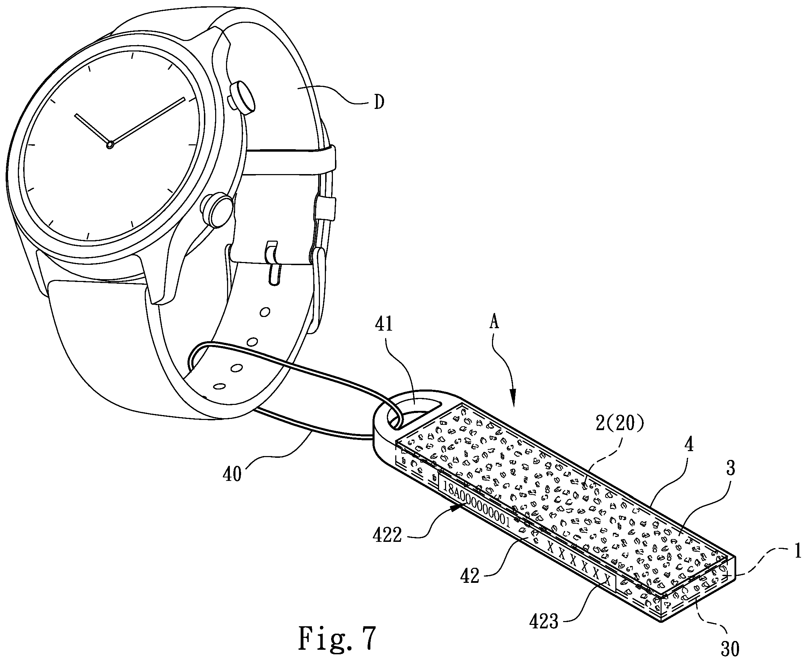

In a third practical application, the recognition key A can have a loop 40 irremovably extended through the through hole 41 and the recognition key A can be directly hung on a product D via the loop 40, as shown in Fig. 7. Recognition image information of all side surfaces of the recognition key A can be stored in advance in an interpretation and analysis device owned by a product distributor or a specific sales point that provides recognition service, or stored in a remote server. When a consumer wants to verify whether the product is a real one or a counterfeit, the interpretation and analysis device at the product distributor or the specific sales point providing recognition service may be used to take precision images of at least one side of the recognition key A attached to the product D. The images are then compared with the recognition image information previously stored in the interpretation and analysis device or available from the connected remote server. If a result from the comparison is "match" without error, the product D is a real one. In this manner, it is able to achieve the recognition function to avoid counterfeit product.

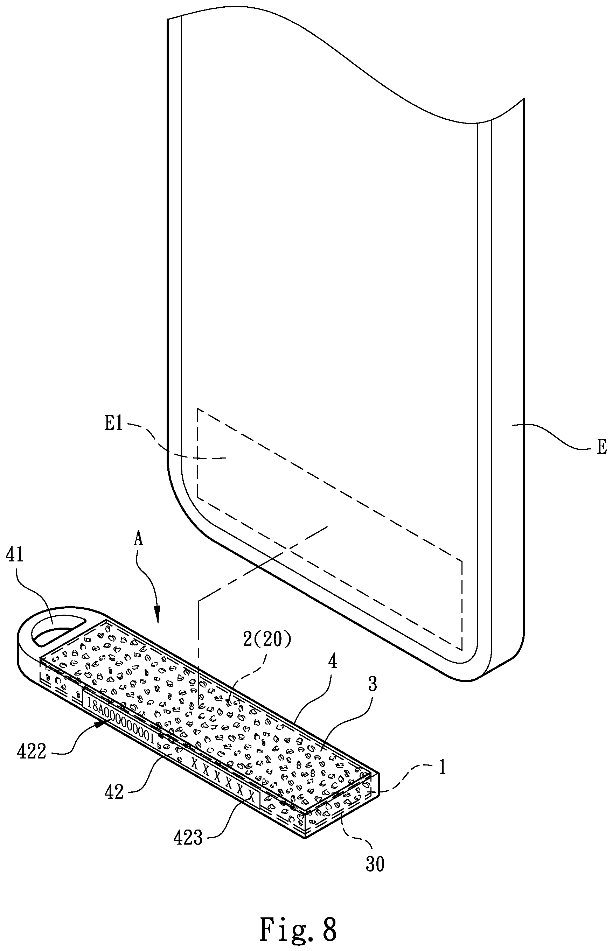

In a fourth practical application, recognition image information of all side surfaces of the recognition key A can be stored in advance in a mobile device E, such as a cell phone. When the mobile device E executes an application program, an interpretation and analysis device E1 can be built therein. The interpretation and analysis device E1 can load in the recognition image information of all side surfaces of the recognition key A stored in the mobile device E and can acquire images via an attachment, such as a screen or a fingerprint recognition unit, of the mobile device E. To use the recognition key A, first approach the recognition key A to a recognition position defined by the interpretation and analysis device E1, as shown in Fig. 8. This procedure is similar to that to be done in fingerprint recognition. The recognition key A is compared with the recognition image information loaded in the interpretation and analysis device E1 and analyzed. If a result from the comparison and analysis is "match" without error, the mobile device E can be unlocked. In this manner, it is able to achieve the recognition function for unlocking the mobile device E.

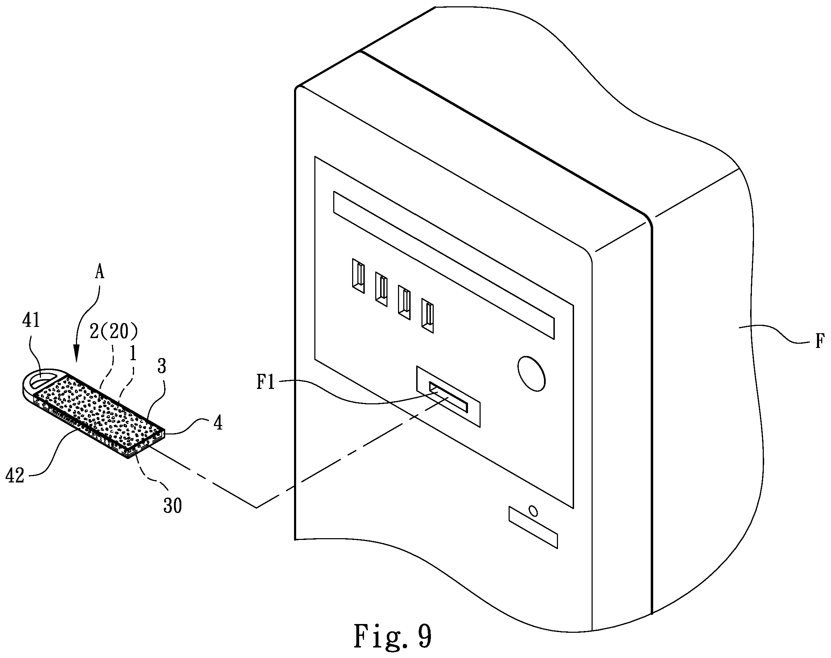

In a fifth practical application, recognition image information of all side surfaces of the recognition key A is stored in advance in an interpretation and analysis device F1 provided on an information device F. To use the recognition key A, first extend the recognition key A into the interpretation and analysis device F 1, as shown in Fig. 9. The interpretation and analysis device F1 is internally provided with an optical detection instrument for acquiring precision images of at least one side surface of the recognition key A and comparing the acquired images with the recognition image information previously stored in the information device F. If a result from the comparison is "match" without error, the information device F can be activated to provide proper access thereto. In this manner, it is able to achieve the recognition function for private information management and security protection.

The first embodiment of the present invention has the following advantages when it is in practical application:

(1) The color granules 20 are natural gemstones having different colors, shapes, sizes, and surface structures, including crystal surfaces, fracture lines, and facets. Therefore, every color granule 20 is an independent and random product. In view that there are not any two structural bodies of the color granules 20 of the same color being found to have identical features, it is absolutely impossible to find any two or more structural bodies of the color granules 20 of different colors to have identical features among them.

(2) The color granules 20 are randomly distributed in the carrier 1 to show a complicate distribution (or spatial coordinate) state, different directions, and irregular arrangements. These factors together with the inherent structural differences among the color granules 20 further increase the difficulty and cost of replicate the entire recognition key A. In this manner, it is possible to achieve the effect of suppressing people's intention and motive of counterfeiting.

(3) Since the color granules 20 consist of crystallized and uncut natural small gemstones, they require only very low material cost. The color granules 20 can also be easily processed to effectively reduce the manufacturing cost and accordingly, enable increased overall economic benefits.

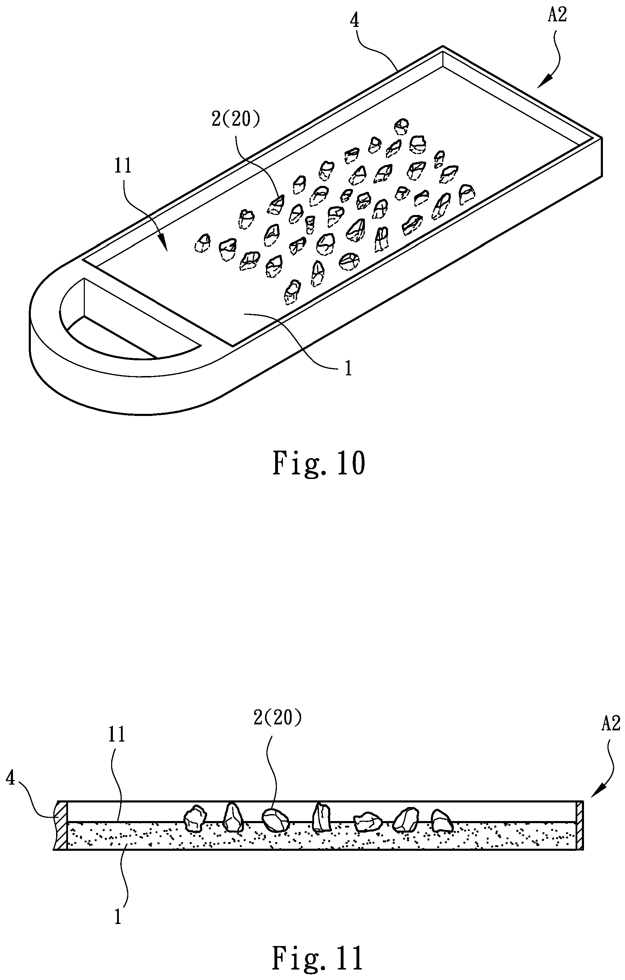

Please refer to Figs. 10 and 11, in which a recognition key A2 according to a second embodiment of the present invention is shown. The recognition key A2 includes a carrier 1 and a plurality of recognition bodies 2. The carrier 1 can be a 3D structural body having a cross section of any geometrical shape, such as a rectangle, a square, a polygon, a circle, or a shape having corrugated edges. The carrier 1 may be formed of a cured clear resin material or acrylic material. The carrier 1 includes at least one joint surface 11. Other portions of the carrier 1 are embedded below the joint surface 11.

The recognition bodies 2 in the second embodiment are color granules 20 the same as those in the first embodiment. The color granules 20 have a granular size from about 2 to about 4 mm and are randomly mixed and distributed in the carrier 1. The recognition bodies 2 are fixedly held to and partially exposed from the joint surface 11.

In the second embodiment, the depth by which the recognition bodies 2 are respectively partially buried in the carrier 1 is preferably from one third to one half of a full height of each recognition body 2, depending on different bonding properties between the recognition bodies 2 and the carrier 1.

In the above structure, the carrier 1 is formed by pouring a liquid resin material into a predetermined mold. A plurality of recognition bodies 2 is randomly scattered over the surface of the liquid resin material before the resin is cured. The recognition bodies 2 are partially, i.e. have their lower portions, sunken into the resin material under their own weight. When the resin material is cured to form the carrier 1, and the recognition bodies 2 are firmly bonded and fixedly held to the surface of the carrier 1.

In practical implementation of the second embodiment of the present invention, the carrier 1 is provided around its outer edges with a frame 4 like that in the first embodiment. A height of one side of the frame 4 closer to the joint surface 11 is higher than a height of the top edges of the recognition bodies 2, so that the frame 4 can form a protection to the portions of the recognition bodies 2 that are protruded from the joint surface 11.

In the above structure of the second embodiment, the recognition bodies 2 are different in color and are randomly scattered on the joint surface 11 of the carrier 1. The difference in colors enables easy and direct visual recognition, which together with the difference of the recognition bodies 2 in plane coordinates, directions, and outer configurations make the recognition key A2 present unique and random recognizable images when being observed. Further, since the portions of the recognition bodies 2 that are partially exposed from the carrier 1 also have different structural features, including different colors, shapes, sizes, and irregular, multilayer, and intersected three-dimensional surfaces. This condition is the same as having a plurality of different biological recognition features that are concentrated on the carrier 1 to provide the property of easy visual determination and form a recognition mechanism that can not be easily copied or counterfeited.

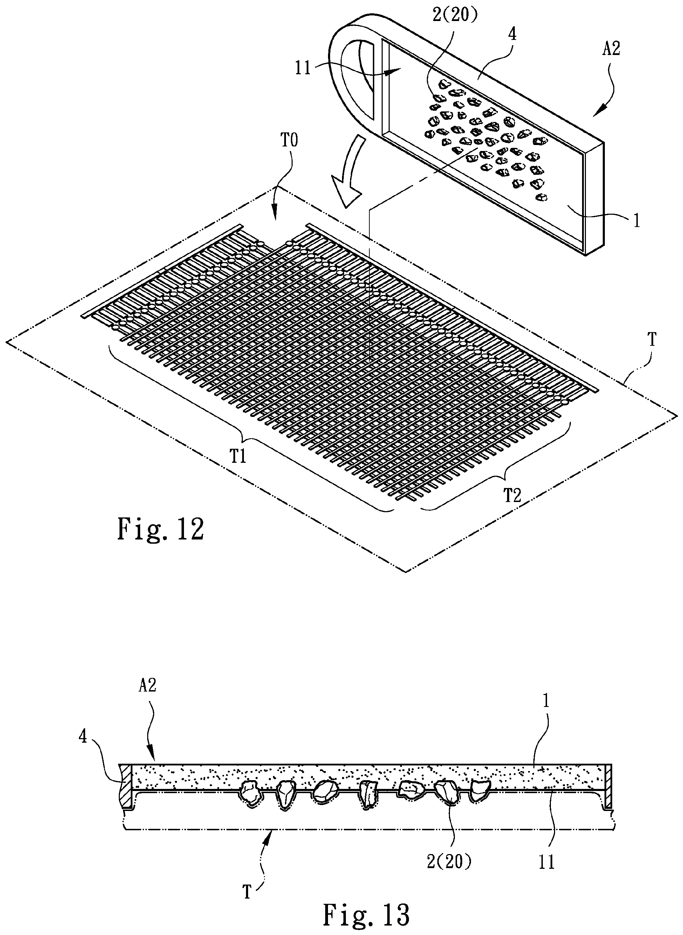

Please refer to Figs. 12 and 13. The recognition key A2 with the above structure can be used with a touch detection device T, which is a kind of touch plate formed using modern (non-electrical) touch-sensing technology. The touch detection device T has correct unlocking information stored thereon and includes a touch detection surface T0. On or in the touch detection surface T0, a plurality of flexible longitudinal touch-sensing passages T1 and a plurality of flexible transverse touch-sensing passages T2 are densely distributed. The flexible longitudinal and transverse touch-sensing passages T1 and T2, when they are subjected to an external force applied thereto by touch of the recognition bodies 2, can accurately sense touch strengths and depths at coordinate positions on the touch detection surface T0 touched by the recognition bodies 2.

In practical implementation, thanks to the modern technology, the flexible longitudinal and transverse touch-sensing passages T1, T2 and their spacing can be so fine that they can provide an excellent sensing function with a precision in the level of micrometers. Therefore, the recognition key A2 and the touch detection device T can achieve a highly precise and accurate sensing recognition effect.

To recognize the recognition key A2, first press the joint surface 11 of the recognition key A2 against a predetermined correct position on the touch detection surface T0 of the touch detection device T. The longitudinal and transverse touch-sensing passages T1, T2 can be flexibly attached to the irregular 3D surfaces of the recognition bodies 2 to accurately sense the coordinate positions and protruded heights of the recognition bodies, such as the 3D configurations or volumes of the portions of the recognition bodies 2 exposed from the joint surface 11. The sensed numerical information is compared with correct unlocking information previously stored in the touch detection device T. If the result from the comparison is "match" without error, an unlocking instruction is output. In this manner, a recognition method convenient for use and having good recognition accuracy is provided.

In addition, a mature AI and optical visual recognition system (not shown) can be utilized to acquire at least part of top and bottom images of the joint surface 11 taken from a top or all lateral sides of the carrier 1 of the recognition key A2. Different appearances, colors, sizes, irregular multilayer intersected 3D surfaces, plane coordinates, and orientations of the recognition bodies 2 can be compared with correct unlocking information previously stored in the touch detection device T. If the result from the comparison is "match" without error, an unlocking instruction is output. In this manner, a recognition method that does not require any high-difficulty computation is formed.

During system setup of the above touch detection device T according to the present invention, it is completely not necessary to input or store any user's biological characteristics and personal information. Therefore, there is not any risk of personal information leakage when using the touch detection device T.

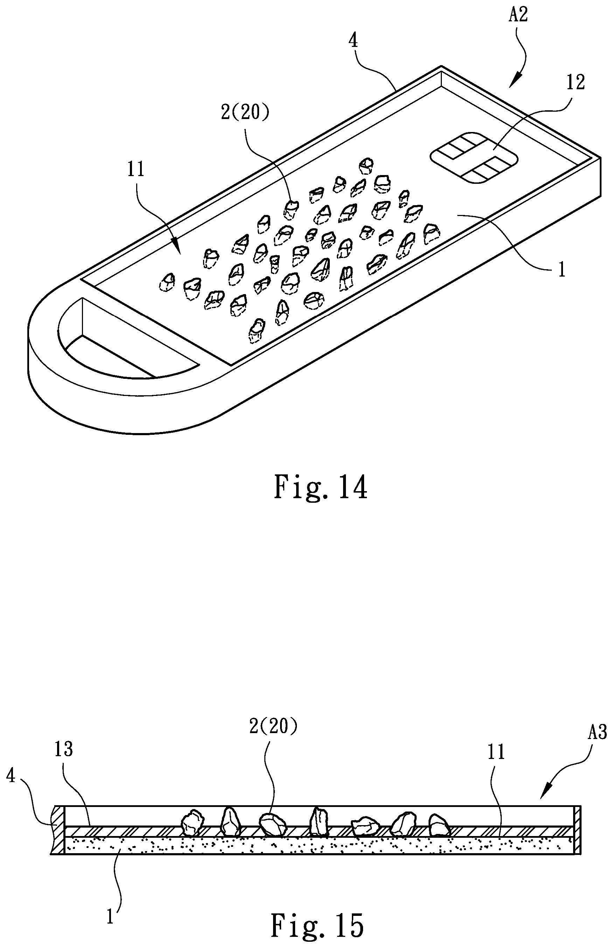

Please refer to Fig. 14. An anti-forgery key device according to a third embodiment of the present invention includes a recognition key A2, which includes a carrier 1 and a plurality of recognition bodies 2 the same as those in the first embodiment of the present invention, and the recognition bodies 2 are fixedly held to the carrier 1 in the same way as that used in the first embodiment. However, the recognition key A2 in the third embodiment is different from the first one in that:

The carrier 1 in the third embodiment has an identification element 12 associated with the joint surface 11. The identification element 12 may be a chip (i.e. an integrated circuit (IC) card) or a barcode. With a structural design of the identification element 12, the chip (i.e. IC card) can be compared using a card reader, or in the case of a barcode, the barcode can be scanned using a scanner, to form a secondary recognition system of the recognition key A2 when the touch detection device T or an image recognition device is used for recognizing and detecting the recognition bodies 2 on the recognition key A1.

Please refer to Fig. 15, which is a cross sectional view of an anti-forgery key device according to a fourth embodiment of the present invention. In the fourth embodiment, the anti-forgery key device includes a recognition key A3, which is includes a carrier 1 and a plurality of recognition bodies 2 the same as those in the second embodiment. The fourth embodiment is different from the second embodiment in further including a bonding layer 13.

The bonding layer 13 is provided on the joint surface 11 of the carrier 1 for bonding the recognition bodies 2 to the joint surface 11. In the fourth embodiment, the depth by which the recognition bodies 2 are respectively buried in and bonded to the bonding layer 13 can be equal to a proper percentage of a full height of each recognition body 2, and is preferably from one third to one half of the full height of each recognition body 2.

In the fourth embodiment, the carrier 1 may be made of a clear acrylic board, and the bonding layer 13 may be a photocurable (ultraviolet curable) adhesive to facilitate quick curing of the bonding layer 13.

In conclusion, the anti-forgery key device of the present invention, the manufacturing method thereof, the detection device therefor, and the detection method thereof can indeed achieve high precision level of recognition and is uneasy to replicate. Further, the present invention employs a press touch function to simplify the mechanism of detecting the recognition key. Therefore, the present invention meets the requirements of novelty and improvement for granting a patent. It is also understood the present invention has been described with some preferred embodiments thereof and many changes and modifications in the described embodiments can be carried out without departing from the scope and the spirit of the invention that is intended to be limited only by the appended claims.

## Claims

1. An anti-forgery key device including a recognition key (A, A2, A3), **characterized in that** the recognition key (A, A2, A3) comprising:
a carrier (1) made of a clear resin material that is curable to form a clear structural body occupying a three-dimensional space; and
a plurality of granular recognition bodies (2) having different colors, shapes, sizes, surface textures, and surface fractured facets; and the recognition bodies (2) being randomly distributed and fixedly held in and/or on the carrier (1).

2. The anti-forgery key device as claimed in claim 1, wherein the recognition bodies (2) are color granules (20) selected from the group consisting of uncut small pieces of gemstones of natural crystals having natural colors and uncut small pieces of gemstones being artificially dyed or specially processed and dyed.

3. The anti-forgery key device as claimed in claim 2, wherein the carrier (1) includes at least one joint surface (11); the color granules (20) of the recognition bodies (2) being randomly distributed in and fixedly held to the joint surface (11); and the color granules (20) of the recognition bodies (2) respectively having a portion exposed from the joint surface (11) while other portions are embedded below the joint surface (11).

4. The anti-forgery key device as claimed in claim 3, wherein the joint surface (11) of the carrier (1) has a bonding layer (13) provided thereon; and the color granules (20) of the recognition bodies (2) being fixedly held to the joint surface (11) by the bonding layer (13).

5. The anti-forgery key device as claimed in claim 3, wherein a depth by which the color granules (20) of the recognition bodies (2) are respectively embedded below the joint surface (11) accounts for one third to one half of a full height of each color granule (20) of the recognition body (2).

6. The anti-forgery key device as claimed in any one of claims 1 to 5, wherein the carrier (1) is externally provided with a frame (4), which is a loop-shaped frame defining an internal receiving space (43), and the carrier (1) being uniformly filled and distributed in the receiving space (43).

7. The anti-forgery key device as claimed in claim 6, wherein the carrier (1) has an upper and a lower surface respectively provided with a clear, wear-resistant layer (3, 30).

8. The anti-forgery key device as claimed in claim 7, wherein the frame (4) is provided on an outer surface thereof with an information zone (42), and the information zone (42) having at least one of a number (422) and a mark (423) shown therein.

9. A method of manufacturing an anti-forgery key device as claimed in claim 8, comprising the following steps:
mixing the recognition bodies (S11): in which a plurality of recognition bodies (2) of different appearances, color distributions and volumes is randomly mixed with each other;
blending the recognition bodies with a resin material (S12): in which the mixed recognition bodies are blended with a proper amount of resin material, so that the recognition bodies (2) are randomly distributed in the resin material at different locations;
providing a mold (S13): in which a clear, wear-resistant layer (30) is spread on a bottom of the receiving space (43) defined in the frame (4), so that the frame (4) forms a mold and the receiving space (43) forms a material feeding space of the mold;
injecting blended material (S14): in which the resin material blended with the recognition bodies (2) is fed into the material feeding space of the mold; and the mold is kept in a vibrating state in the process of feeding the blended material, so that the resin material can be uniformly filled in the mold;
packaging (S15): in which another clear, wear-resistant layer (3) is spread on a top of the receiving space (43) of the frame (4); and the carrier (1) is formed when the resin material is fully cured;
coding (S16): in which an outer side surface of at least one of the frame (4) and the carrier (1)is processed to form an information zone (42); and the recognition bodies (2) and the carrier (1), the clear, wear-resistant layers (3, 30), and the frame (4) together form a recognition key (A) of the anti-forgery key device; and
quality controlling and screening (S17): in which a quick inspection and comparison is performed on all recognition keys (A) completed through the above steps S11 to S16, so as to remove products that are defective or have the same recognition features and ensure every produced recognition key (A) has unique recognition features.

10. A method of detecting an anti-forgery key device as claimed in any one of claims 1 to 5, comprising the following steps:
setting up an interpretation and analysis device (B1, C1, F1), which can acquire recognition image information corresponding all side surfaces of the recognition key (A, A2, A3); and the recognition image information being stored in advance in the interpretation and analysis device (B1, C1, F1) or accessible from a remote server;
extend the recognition key (A, A2, A3) into a predetermined recognition location on the interpretation and analysis device (B1,C1,F1);
the interpretation and analysis device (B1,C1,F1) taking precision images of at least one side surface of the recognition key (A, A2, A3) and comparing the taken images with image information corresponding to the recognition key (A, A2, A3) acquired by the interpretation and analysis device (B1,C1,F1); and
if a result from the comparison being "match" without error, it is determined the recognition key (A, A2, A3) is real.

11. A method of detecting an anti-forgery key device as claimed in any one of claims 1 to 5, comprising the following steps:
using a mobile device (E) to run an application program, so as to install an interpretation and analysis device (E1) in the mobile device (E); the interpretation and
analysis device (E1) being able to load in recognition image information of all side surfaces of the recognition key (A, A2, A3) that is stored in advance in the mobile device (E) and being able to take images via the mobile device (E);
approaching and attaching the recognition key (A, A2, A3) to a recognition position defined by the interpretation and analysis device (E1);
the interpretation and analysis device (E1) driving the mobile device (E) to takes precision images of one side surface of the recognition key (A, A2, A3) that is attached to the recognition position;
the interpretation and analysis device (E1) analyzing the taken images by comparing them with the stored recognition image information; and
if a result from the comparison being "match" without error, it is determined the recognition key (A, A2, A3) is real.

12. A method of detecting an anti-forgery key device as claimed in any one of claims 3 to 5, comprising the following steps:
setting up a touch detection device (T) that has correct unlocking information stored therein;
the touch detection device (T) including a touch detection surface (T0) for sensing touch strengths and depths at all touched coordinate positions, so as to accurately sense coordinate positions, three-dimensional configurations, and volumes of protruded areas of the recognition bodies (2) on the recognition key (A, A2, A3);
the touch detection device (T) comparing detected numeral information with the correct unlocking information stored in the touch detection device (T); and
if a result from the comparison being "match" without error, an unlocking instruction is output, so that a convenient recognition mechanism with high accuracy is formed.

13. The method of detecting an anti-forgery key device as claimed in claim 12, wherein the touch detection surface (T0) is provided with a plurality of densely arranged flexible longitudinal touch-sensing passages (T1) and a plurality of densely arranged flexible transverse touch-sensing passages (T2); the longitudinal and the transverse touch-sensing passages (T1, T2) subjected to external forces being able to accurately sense touch strengths and depths at the touched coordinate positions; and the longitudinal and the transverse touch-sensing passages (T1, T2) being usable to detect the recognition bodies (2) when a predetermined correct position on the joint surface (11) of the carrier (1) is pressed against the touch detection surface (T0) of the touch detection device (T).

14. A device for detecting an anti-forgery key device as claimed in any one of claims 3 to 5, comprising:
a touch detection device (T) having correct unlocking information stored therein; the touch detection device (T) including a touch detection surface (T0) capable of sensing touch strengths and depths at touched coordinate positions to thereby accurately sense coordinate positions, three-dimensional configurations, and volumes of protruded areas of the recognition bodies (2); the touch detection device (T) further comparing detected numeral information with the correct unlocking information stored in the touch detection device (T); and an unlocking instruction being output when a result from the comparison is "match" without error, and a detection device providing a recognition mechanism being formed accordingly.

15. The device for detecting an anti-forgery key device as claimed in claim 14, wherein the touch detection surface (T0) is provided with a plurality of densely arranged flexible longitudinal touch-sensing passages (T1) and a plurality of densely arranged flexible transverse touch-sensing passages (T2); the longitudinal and the transverse touch-sensing passages (T1, T2) subjected to external forces being able to accurately sense touch strengths and depths at touched coordinate positions; and the longitudinal and the transverse touch-sensing passages (T1, T2) being usable to detect the recognition bodies (2) when a predetermined correct position of the joint surface (11) of the carrier (1) is pressed against the touch detection surface (T0) of the touch detection device (T).
